## Europäisches Patentamt
## European Patent Office
## Office européen des brevets

(19)

(11) Publication number: **0 244 128**
A2

# EUROPEAN PATENT APPLICATION

(12)

(21) Application number: **87303350.0**

(22) Date of filing: **15.04.87**

(51) Int. Cl.⁴: **B 65 D 1/02**

(30) Priority: **21.04.86 GB 8609663**

(43) Date of publication of application:
**04.11.87 Bulletin 87/45**

(84) Designated Contracting States:
**AT BE CH DE ES FR GB GR IT LI LU NL SE**

(71) Applicant: **FIBRENYLE LIMITED**
**Skylon House Ellough Industrial Estate**
**Beccles Suffolk NR34 7TB (GB)**

(72) Inventor: **Downing, Trevor Eric**
**3 Sambar Close Eaton Socon**
**St. Neots Huntingdon Cambridgeshire (GB)**

(74) Representative: **Cheyne, John Robert Alexander**
**Mackenzie et al**
**HASELTINE LAKE & CO. 28 Southampton Buildings**
**Chancery Lane**
**London WC2A 1AT (GB)**

(54) **Blow moulded containers.**

(57) A blow-moulded container has a base (6) with a central region (10). The central region (10) has a recess (12), defined by a peripheral wall (14) and a bottom wall (16). The peripheral wall (14) is circular and inclined by approximately 20° to the vertical. The bottom wall (16) is part-spherical with a radius of curvature substantially greater than the depth of the recess. The recess increases the clearance between the central region (10) and a surface on which the container stands.

Fig.1.

Fig.5.

EP 0 244 128 A2

**Description**

## BLOW-MOULDED CONTAINERS

This invention relates to blow-moulded containers, and particularly, although not exclusively, to containers made from polyethyleneterephthalate (PET).

According to the present invention, there is provided a blow-moulded container of plastics material, the base of which has a central recess which extends inwardly of the outer surface of the base towards the interior of the container, the recess being defined by a peripheral wall and a convex bottom wall.

Preferably, the configuration of the recess is such that, when the container rests upright on a horizontal surface, the entire bottom wall of the recess is situated above the level of the lowermost part of the peripheral wall.

The depth of the recess is preferably less than the diametral dimension of the bottom wall of the recess. For example, the depth of the recess may be up to 10mm, and may be between 1mm and 5mm. In a preferred embodiment, the depth is 2.4mm. The recess may be circular, with a diameter between 10mm and 15mm, for example 12mm.

In a preferred embodiment, the bottom wall of the recess is smoothly convex, and may have a part-spherical configuration. The radius of curvature is preferably greater than 10mm, and may be greater than 25mm, for example 50mm. Where the container has a cylindrical side wall, the radius of curvature of the bottom wall of the recess may be approximately the same as, or slightly larger than, the radius of the side wall of the container.

At least a portion of the peripheral wall of the recess is preferably frusto-conical, i.e. it is inclined by a small angle, that is to say less than 45°, to the vertical, when the container stands on a horizontal surface. In a preferred embodiment, this angle is less than 25°, for example approximately 20°. The peripheral wall may also comprise a portion which is substantially cylindrical, this cyclindrical portion being at the mouth of the recess, outwards of the frusto-conical portion.

Blow-moulded containers of the type with which the present invention is concerned are commonly formed from injection moulded preforms. The mould used for injection moulding the preforms has a gate through which the plastics material enters the mould. In the region of the gate, the preform has an irregularly shaped region of crystalline material which will be referred to as the gate area. Preferably, in a container in accordance with the present invention, the gate area is disposed within the recess. The gate area may be crushed during the blow moulding operation to a configuration in which it is flush with the bottom wall of the recess. Alternatively, the gate area may be left uncrushed, standing proud of the remainder of the bottom wall.

Containers in accordance with the present invention may be blow moulded in equipment comprising a stretch rod which extends into the container during its formation and engages the interior of the base of the container. The stretch rod is extended during the blow moulding operation to cause the heated preform to be stretched lengthwise until the portion of the preform that will form the base engages the surface of the mould in which the operation is taking place. During this time, gas is introduced under pressure into the preform, to expand it into contact with the rest of the surface of the mould. The recess in a container in accordance with the present invention is formed by a raised portion in the surface of the mould constituted by a detachable insert fitted to the mould. The raised portion is disposed so that, during extension of the stretch rod, the portion of the preform which will form the base first comes into contact with the raised portion. The stretch rod preferably has a convex tip, which may have substantially the same radius of curvature as the concave surface of the raised portion which will form the bottom wall of the recess. If the gate is to be crushed, then the radius of curvature of the tip of the stretch rod may be slightly less than the radius of curvature of the concave surface of the raised portion. Alternatively, if the gate is to be left uncrushed, the radius of curvature of the tip of the stretch rod may be greater than that of the concave surface of the raised portion.

For a better understanding of the present invention, and to show how it may be carried into effect, reference will now be made, by way of example, to the accompanying drawings, in which:

Figure 1 is a side view of a blow-moulded bottle;

Figure 2 is an underneath view of the bottle of Figure 1;

Figure 3 is a sectional view taken on the line III-III in Figure 2;

Figure 4 represents diagrammatically a stage during the blow moulding of the bottle of Figures 1 to 3;

Figure 5 is a fragmentary sectional view of a modified configuration for the base of a bottle; and

Figure 6 is a sectional view of a mould insert for use in the manufacture of a bottle in accordance with Figure 5

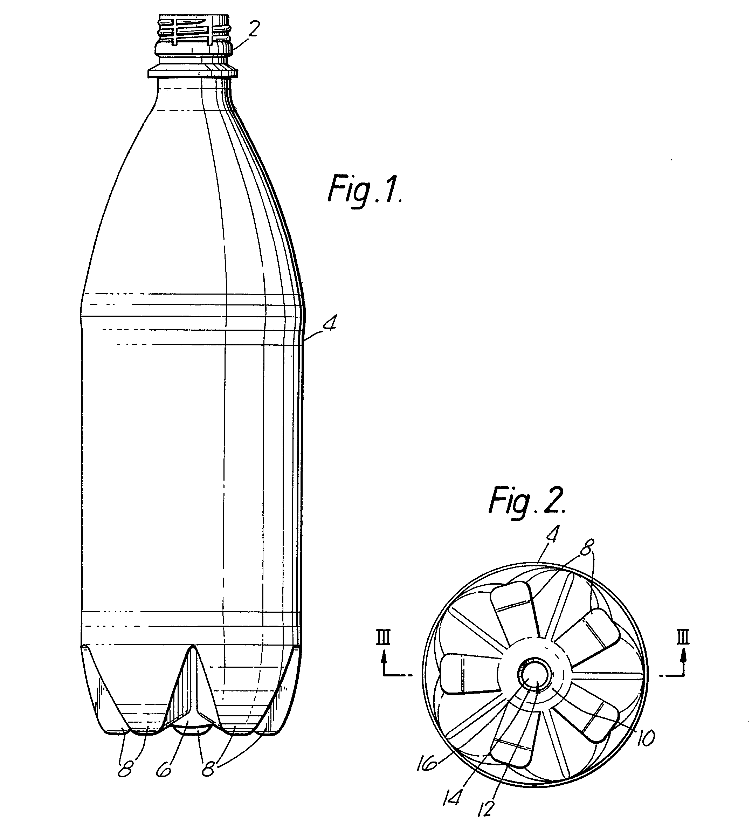

The bottles shown in Figures 1 to 3 and 5 are made from PET. As shown in Figure 1, the bottle comprises a neck 2, a side wall 4 and a base 6. The base 6 is provided with five legs 8, which support the bottle when it is standing upright. In an alternative embodiment, the base 6 may be hemispherical, or otherwise smoothly convex, in which case the bottle would be provided with a base cup to support the bottle upright. Also, the base 6 may have a number of legs 8 other than five, for example it may have six legs 8.

As shown in Figure 2, the legs 8 are distributed regularly around a central region 10 of the base. The central region 10 is convex as viewed from the underside of the bottle. A recess 12 is provided in the middle of the central region 10.

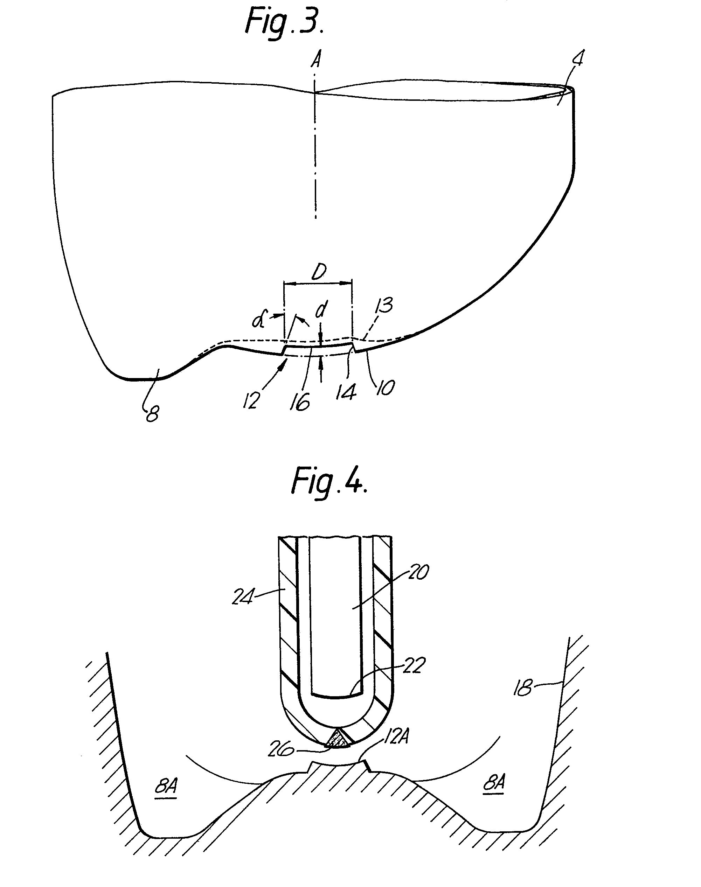

A dashed line 13 in Figure 3 shows the inner surface of the material of the bottle in the region of the recess 12. It will be appreciated that the recess 12 is formed in the thickness of the material. The recess has a peripheral wall 14 and a convex bottom wall 16 which is circular. The bottom wall 16 is substantially part-spherical, and has a radius of curvature which is similar to that of the surrounding central region 10. The dimension D across the bottom wall 16, i.e. the diameter of the bottom wall 16, is significantly larger, in the embodiment shown in Figures 1 to 3, than the depth d of the recess. In the illustrated embodiment, the dimension D is 10.75mm, while the depth d is 1.0mm. Consequently, the depth of the recess is slightly less than one tenth of the dimension D. The diameter of the cylindrical side wall 4 is 83mm.

The side wall 14 is circular, as viewed in Figure 2, and is inclined to the axis A of the bottle at an angle $\alpha$ which is less than 45° and, in the illustrated embodiment, is 20°. It will be appreciated that, since this angle is relatively small, the side wall 14 meets the bottom wall 16 at a relatively sharp corner.

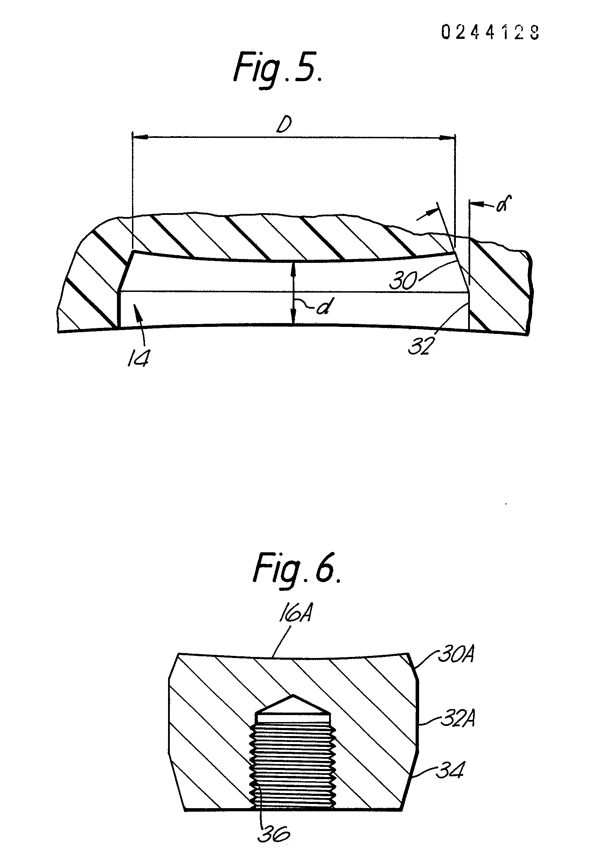

Figure 4 shows a mould 18 configured to form the base of the bottle of Figures 1 to 3. Thus, the mould has recesses 8A for forming the legs 8, and a raised portion 12A for forming the recess 12. Although not indicated in Figure 4, the raised portion 12A is constituted by a detachable insert in the mould, as will be described in greater detail with reference to Figure 6.

A stretch rod 20 extends into the mould 18. This stretch rod has a convex tip 22 which, in the illustrated embodiment, has a radius of curvature which is approximately the same as that of the upper face of the raised portion 12A. However, the radius of curvature of the convex tip 22 of the stretch rod 20 may be greater than, or less than the radius of curvature of the upper surface of the raised portion 12A, for reasons which will be described below.

In operation of the blow moulding apparatus, an injection-moulded preform 24 is inserted into the mould, and is supported at its neck. The stretch rod 20 extends into the preform 24 through the neck. The preform 24 is previously softened by heating, and, when in the mould, gas under pressure is introduced into it to expand it into contact with the wall of the mould 18. At the same time, the stretch rod 20 is extended, to push the lower end of the preform 24 towards the base of the mould 18.

The preform 24 has a gate area 26 of hard crystalline material which is created by the injection moulding process by which the preform 24 is made. As the stretch rod 20 descends, the gate area 26 is pushed downwardly into contact with the raised portion 12A, and subsequently the gas supplied to the interior of the preform 24 causes the material of the preform to be extended in a controlled manner into the recess 8A.

Appropriate selection of the radii of curvature of the tip 22 of the stretch rod 20 and of the upper surface of the raised portion 12A can determine whether or not the gate area 26 is crushed during the blow moulding process, or left uncrushed. For example, if the radius of curvature of the tip 22 of the stretch rod 20 is less than that of the upper surface of the raised portion 12A, the gate area 26 will be crushed, whereas, if the radius of curvature of the tip is greater than that of the upper surface of the raised portion 12A, the gate area 26 will be left uncrushed. By way of example, if the gate area 26 is to be crushed, the radius of curvature of the stretch rod tip 22 may be 12mm, while that of the upper surface of the raised portion 12A may be 50mm.

By providing the raised portion 12A with a concave upper surface which is engaged by the preform 24 when it is stretched by the stretch rod 20, the preform is reliably centralised within the mould. This aids good material distribution over the surface of the mould, which means that the wall thickness of the resulting bottle can be reliably maintained. Good material distribution is particularly important in bottles provided with integral legs 8, since this ensures proper formation of the legs.

Figure 5 shows an alternative configuration for the recess 12. In the embodiment of Figure 5, the diameter D of the bottom wall 16 is 11mm, while the depth d of the recess is 2.4mm. Thus the depth is significantly greater than in the embodiment of Figures 1 to 3. Another difference is that the peripheral wall 14 of the recess shown in Figure 5 has two portions 30 and 32. The portion 30 corresponds to the peripheral wall of the embodiment of Figures 1 to 3, in that it is frusto-conical with an angle of inclination $\alpha$ of 20°. The second portion 32, which opens at the mouth of the recess 12, is cylindrical (i.e. it extends parallel to the axis of the bottle). The diameter of the cylindrical portion 32 is 12mm. The axial extents of the two portions 30 and 32 are substantially equal.

Figure 6 shows an insert for fitting to a mould for forming the bottles of Figures 1 to 3 and 5. The insert has a concave upper surface 16A for forming the bottom wall 16 of the recess 12. Furthermore the insert has a cylindrical outer body 32A which terminates at its upper end at a frusto-conical portion 30A and at its lower end at a frusto-conical portion 34. In its lower face, the insert has a tapped bore 36 for receiving a fixing bolt.

In use, the insert is received in a cylindrical bore in then base of the mould 18 (Figure 4), and is secured in position by a bolt engaging the tapped bore 36. The depth of the recess to be formed can be adjusted by adjusting the position of the insert in its bore. For example, to increase the depth of the recess, the insert would be inserted further into the bore so that the surface 16A would project further into the mould cavity. This would increase the length of the cylindrical portion 32A which extends into the mould cavity and thus would increase the length of the portion 32 of the peripheral wall 14 in the resulting bottle. The overall length of the cylindrical portion 32A of the insert may be up to 10mm to provide the opportunity for large variations in the depth of the recess. In the illustrated embodiment, the axial length of the cylindrical portion is 4.5 mm.

The recess 12 has the effect of ensuring that the gate area 26 of the preform does not form the lowermost point of the base (or, in a bottle provided with the legs 8, the lowermost point of the central region 10). This is advantageous in bottles provided with the legs 8, since it provides an increased clearance between the central region 10 and a surface on which the bottle stands. Consequently, the stability of the bottle under conditions of high temperature or high internal pressure is improved, since there is little likelihood that, under such conditions, the bottle could be distended to the extent that the gate area 26 becomes the lowermost point of the bottle. If this happened, the bottle would not be able to rest in a stable manner on all of the legs 8.

Even in the case of bottles where no legs 8 are provided, but where the bottle is provided with a base cup, the recess 12 means that the clearance between the gate area 26 and the bottom wall of the base cup is increased, so improving the stability of the bottle under elevated temperature.

Another advantage of the recess 12 is that contact between the gate area 26 and wiping devices used for coating the bottles can be avoided, so reducing wear on the base wiping devices.

Also, it has been found that the presence of the recess improves the stiffness of the base region. This is particularly useful for preventing the central region 10 from dropping towards the level of the bottom of the legs 8 when the bottle is removed, still warm, from the mould. As a result, the bottle can be removed from the mould earlier than would otherwise be the case, thus reducing the blow-moulding cycle time.

## Claims

1. A blow-moulded container of plastics material, the base of which has a central recess which extends inwardly of the outer surface of the base towards the interior of the container, the recess being defined by a peripheral wall and a convex bottom wall.

2. A container as claimed in claim 1, in which the configuration of the recess is such that, when the container rests upright on a horizontal surface, the entire bottom wall of the recess is situated above the level of the lowermost part of the peripheral wall.

3. A container as claimed in claim 1, in which the recess is shallow relatively to the diametral dimension of the bottom wall of the recess.

4. A container as claimed in claim 3, in which the depth of the recess is not more than half the diametral dimension of the bottom wall.

5. A container as claimed in any one of the preceding claims, in which the depth of the recess is not more than 10mm.

6. A container as claimed in claim 5, in which the depth of the recess is in the range 2 to 5mm.

7. A container as claimed in claim 6, in which the diameter of the recess is in the range 10mm to 15mm.

8. A container as claimed in any one of the preceding claims, in which the bottom wall of the recess is smoothly convex.

9. A container as claimed in claim 8, in which the bottom wall of the recess has a part-spherical configuration.

10. A container as claimed in claim 9, in which the radius of curvature of the bottom wall of the recess is greater than 10mm.

11. A container as claimed in claim 1, in which the peripheral wall of the recess comprises a frusto conical surface which is inclined by less than 45° to the vertical, when the container stands on a horizontal surface.

12. A container as claimed in claim 11, in which the perpendicular wall of the recess also comprises a cylindrical surface.

13. A container as claimed in any one of the preceding claims, in which the internal surface of the container, opposite the bottom wall of the recess, is concave.

14. Equipment for forming a blow-moulded container of plastics material, the equipment comprising a mould cavity having a base region for forming a base of a container, the base region of the mould cavity having a projection extending inwardly of the mould cavity, the projection having a peripheral wall and a concave top face.

15. Equipment as claimed in claim 14, further comprising a stretch rod having a convex tip movable into the proximity of the top face of the projection.

16. Equipment as claimed in claim 14, in which the tip of the stretch rod has a radius of curvature which is substantially equal to that of the top face of the projection.

17. Equipment as claimed in claim 14, in which the tip of the stretch rod has a radius of curvature which is less than that of the top face of the projection.

18. Equipment as claimed in claim 14, in which the tip of the stretch rod has a radius of curvature which is greater than that of the top face of the projection.

19. Equipment as claimed in claim 14, in which the projection comprises a detachable insert.

20. A method of blow-moulding a container in which a heated parison is stretched in a mould cavity by extension of a stretch rod until an end region of the parison engages a top concave face of a projection extending inwardly of the mould cavity, whereafter gas under pressure is introduced into the parison to expand it into contact with the remainder of the surface of the mould cavity.

0244128

Fig.1.

Fig.2.

*Fig.3.*

*Fig.4.*

## Fig. 5.

## Fig. 6.